# EUROPÄISCHE PATENTSCHRIFT

(11) **EP 1 227 015 B1**
(45) Veröffentlichungstag und Bekanntmachung des Hinweises auf die Patenterteilung: **16.11.2005**
(21) Anmeldenummer: 02090029.6
(22) Anmeldetag: 21.01.2002
(51) Int. Cl.: B60R 22/28

(54) **Sicherheitsgurtvorrichtung**
Seat belt device
Dispositif de ceinture de sécurité

(30) Priorität: 25.01.2001 DE 10103319
(43) Veröffentlichungstag der Anmeldung: 31.07.2002
(73) Patentinhaber: TAKATA-PETRI (Ulm) GmbH, 89081 Ulm (DE)
(72) Erfinder: Herrmann, Thomas, 89171 Illerkirchberg (DE); Schwer, Thomas, 89073 Ulm (DE); Frank, Richard, 89275 Elchingen (DE); Ruge, Vadim, 88483 Burgrieden (DE)
(74) Vertreter: Müller, Wolfram Hubertus

(56) Entgegenhaltungen:
- DE-A- 2 900 212
- DE-A- 19 857 927
- DE-A- 19 915 024
- GB-A- 905 836
- GB-A- 1 390 889
- US-A- 3 680 913
- US-A- 4 978 139

## Beschreibung

Die Erfindung betrifft eine Sicherheitsgurtvorrichtung für Kraftfahrzeuge mit einem Sicherheitsgurt und einer Umlenkeinrichtung für den Sicherheitsgurt nach dem Oberbegriff der Anspruchs 1. Eine derartige Vorrichtung ist aus der GB-A-1 390 889 bekannt.

Weiterhin ist es bekannt, in einen Gurtaufroller einen Torsionsstab zu integrieren, der durch eine unfallbedingte Ziehbewegung des Gurts bei blockiertem Aufroller verformt wird. Diese Art der Energieabsorption erfordert einen speziell dafür ausgebildeten Gurtaufroller.

Es ist das der Erfindung zugrundeliegende Problem (Aufgabe), eine Sicherheitsgurtvorrichtung der eingangs genannten Art zu schaffen, die bei möglichst einfachem Aufbau sowie sicherer und zuverlässiger Funktionsweise eine optimale Aufnahme der bei einem Unfall vom Fahrzeuginsassen eingebrachten Energie gewährleistet, und zwar insbesondere ohne Beeinträchtigung der Funktion anderer Komponenten der Sicherheitsgurtvorrichtung.

Die Lösung dieser Aufgabe erfolgt durch eine Sicherheitsgurt vorrichtung mit dem Merkmalen des Anspruchs 1.

Erfindungsgemäß wird eine Bewegung der Umlenkeinrichtung für die Energieabsorption genutzt. Hierzu ist zwischen der fahrzeugfesten Halterung und der mit dem Sicherheitsgurt zusammenwirkenden Umlenkeinrichtung eine Absorptionseinheit vorgesehen, die so ausgebildet ist, daß sie im Normalbetrieb eine Bewegung der Umlenkeinrichtung verhindert, bei über den Sicherheitsgurt auf die Umlenkeinrichtung einwirkenden Kräften, wie sie bei einem Unfall auftreten, dagegen eine Bewegung der Umlenkeinrichtung in der Absorptionsrichtung zuläßt. Die erfindungsgemäße Absorptionseinheit gestattet es, bei einem Unfall die kinetische Energie des Fahrzeuginsassen dadurch aufzunehmen, daß während der Bewegung der Umlenkeinrichtung eine Formänderung der Absorptionseinheit erfolgt. Diese Formänderung kann grundsätzlich auf beliebige Art und Weise erfolgen, beispielsweise durch Materialverformung, Materialwegnahme, Materialzerstörung oder eine andere Art der Materialbearbeitung. Auch Kombinationen verschiedener Materialbearbeitungsarten sind erfindungsgemäß möglich.

Des weiteren ist erfindungsgemäß vorgesehen, daß die Umlenkeinrichtung zumindest eine Umlenkrolle umfaßt. Die Umlenkrolle kann an einem mit der Absorptionseinheit zusammenwirkenden Träger gelagert sein. Ferner ist erfindungsgemäß ein Ablenkorgan vorgesehen, das mit dem Sicherheitsgurt zwischen der Umlenkeinrichtung und einem Fahrzeuginsassen derart zusammenwirkt, daß der Sicherheitsgurt zwischen der Umlenkeinrichtung und dem Ablenkorgan zumindest näherungsweise parallel zur Absorptionsrichtung verläuft. Hierdurch sorgt das Ablenkorgan für eine optimale Einleitung der bei einem Unfall auftretenden Kräfte über den Sicherheitsgurt in die Umlenkeinrichtung.

Vorzugsweise ist die Absorptionsrichtung vertikal nach unten gerichtet. Die Umlenkeinrichtung kann sich während der Energieabsorption parallel zur Fahrzeugseitenwand und parallel zu einem sich zwischen einem Gurtaufroller und der Umlenkeinrichtung erstreckenden Gurtabschnitt bewegen.

Des weiteren ist bevorzugt vorgesehen, daß die Formänderung der Absorptionseinheit irreversibel ist. Ferner kann die Absorptionseinheit zur Formänderung zumindest bereichsweise insbesondere plastisch verformbar sein.

Gemäß einem weiteren bevorzugten Ausführungsbeispiel der Erfindung ist vorgesehen, daß die Absorptionseinheit zumindest einen Teil der Halterung umfaßt.

In einer praktischen Ausgestaltung der Erfindung wird vorgeschlagen, daß die Absorptionseinheit wenigstens ein insbesondere streifen- oder stabförmiges Biegeelement umfaßt, das sich zwischen der Umlenkeinrichtung und der Halterung bevorzugt etwa parallel zur Absorptionsrichtung erstreckt.

Das Biegeelement kann mit einem oberen Ende an der Umlenkeinrichtung und mit einem unteren Ende an der Halterung befestigt sein, so daß durch die Bewegung der Umlenkeinrichtung das obere Ende in Richtung des unteren Endes bewegt und auf diese Weise am Biegeelement Verformungsarbeit geleistet wird. Bevorzugt ist es, wenn zwei parallel zueinander verlaufende Biegeelemente vorgesehen sind, die auf einander gegenüberliegenden Seiten des Sicherheitsgurtes angeordnet sind.

Eine alternative oder zusätzliche Möglichkeit zur Energieabsorption besteht gemäß einem weiteren Ausführungsbeispiel der Erfindung darin, daß eine während des Normalbetriebs bestehende Verbindung zwischen wenigstens zwei Teilabschnitten der Absorptionseinheit zur Formänderung der Absorptionseinheit auftrennbar ist.

Dabei kann einer der Teilabschnitte von einem Basisteil gebildet sein, das Bestandteil der Halterung sein kann.

Das Auftrennen der Verbindung, die im Normalbetrieb eine Bewegung der Umlenkeinrichtung in Absorptionsrichtung verhindert, kann gemäß einem weiteren Ausführungsbeispiel der Erfindung dadurch erfolgen, daß ein Absorptionsabschnitt der Absorptionseinheit von einem Basisteil oder der Halterung abreißbar oder aus dem Basisteil oder der Halterung herausreißbar ist.

Des weiteren ist es erfindungsgemäß möglich, daß ein Absorptionsabschnitt der Absorptionseinheit gleichzeitig verformbar und von einem Basisteil oder der Halterung abtrennbar ist.

Eine weitere Ausgestaltung der Erfindung schlägt vor, daß die Formänderung der Absorptionseinheit durch Materialwegnahme bewirkt wird. Die Materialwegnahme kann beispielsweise durch eine spanende Materialbearbeitung erfolgen.

Eine bevorzugte Ausführungsform der Erfindung besteht darin, daß die Absorptionseinheit wenigstens eine zur Formänderung der Absorptionseinheit erweiterbare Aussparung aufweist. Die Aussparung kann schlitzförmig ausgebildet sein und sich parallel zur Absorptionsrichtung erstrekken.

Erfindungsgemäß kann die Erweiterung der Aussparung dadurch erfolgen, daß die Aussparung begrenzendes Material verformt und/oder weggenommen wird.

Die Umlenkeinrichtung oder ein zur Halterung einer Umlenkrolle dienender Träger der Umlenkeinrichtung kann in die Aussparung mit einem Eingriffsabschnitt eingreifen, der aus einem Material besteht, dessen Härte größer als diejenige des die Aussparung begrenzenden Materials ist.

Das bevorzugte Material für das oder die formveränderbaren Abschnitte der Absorptionseinheit ist Stahl.

Die Umlenkeinrichtung ist vorzugsweise an der Halterung insbesondere parallel zur Absorptionsrichtung geführt. Eine definierte Bewegung der Umlenkeinrichtung trotz der zu überwindenden Kräfte ist hierdurch gewährleistet.

Weitere Ausführungsformen der Erfindung sind in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1a - 1c: verschiedene Ansichten einer Ausführungsform einer erfindungsgemäßen Sicherheitsgurtvorrichtung,
- Fig. 2: eine perspektivische Ansicht einer Sicherheitsgurtvorrichtung gemäß einer weiteren Ausführungsform der Erfindung,
- Fig. 3a und 3b: Ansichten einer Sicherheitsgurtvorrichtung gemäß einer weiteren Ausführungsform der Erfindung, und
- Fig: 4a und 4b: eine Sicherheitsgurtvorrichtung gemäß einer weiteren Ausführungsform der Erfindung.

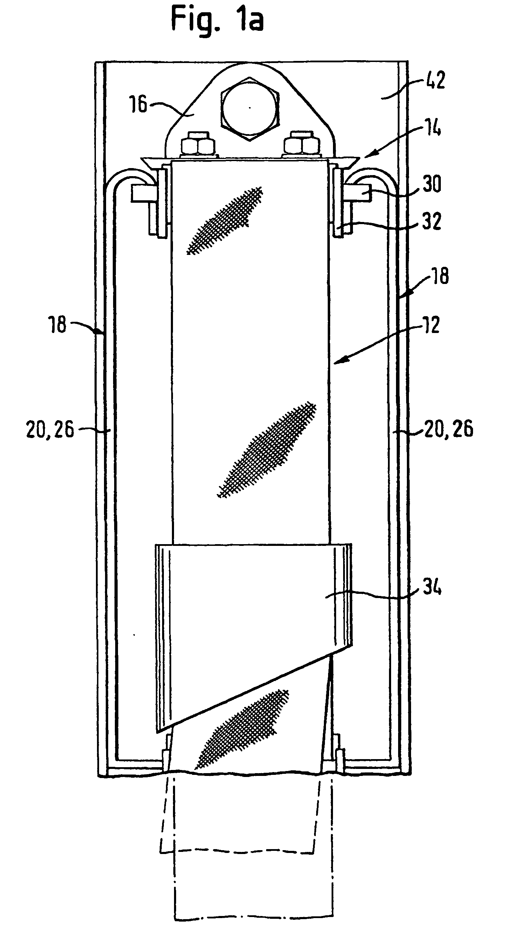

Die in Fig. 1a - 1c gezeigte Sicherheitsgurtvorrichtung umfaßt eine Halterung 16, die (vgl. Fig. 1c) im oberen Bereich einen Halteabschnitt für eine nachfolgend näher erläuterte Umlenkeinrichtung 14 aufweist und im unteren Bereich einen Gurtstraffer trägt, auf den im folgenden nicht näher eingegangen wird. Die Fortführung eines Sicherheitsgurts 12 ist in Fig. 1a - 1c sowie in den übrigen Figuren durch gestrichelte (zum Insassen führender Abschnitt) bzw. durch strichpunktierte (zu einem Gurtaufroller führender Abschnitt) Linien schematisch angedeutet.

Im am Fahrzeug montierten Zustand ist die Halterung 16 am Fahrzeug 42 bzw. an der in den Figuren lediglich angedeuteten Fahrzeugseitenwand 42 insbesondere im Bereich der B- oder C-Säule befestigt. Insbesondere aus Fig. 1c geht hervor, daß die Halterung 16 mit einem Profilabschnitt U-förmigen Querschnitts des Fahrzeugs 42 verbunden ist.

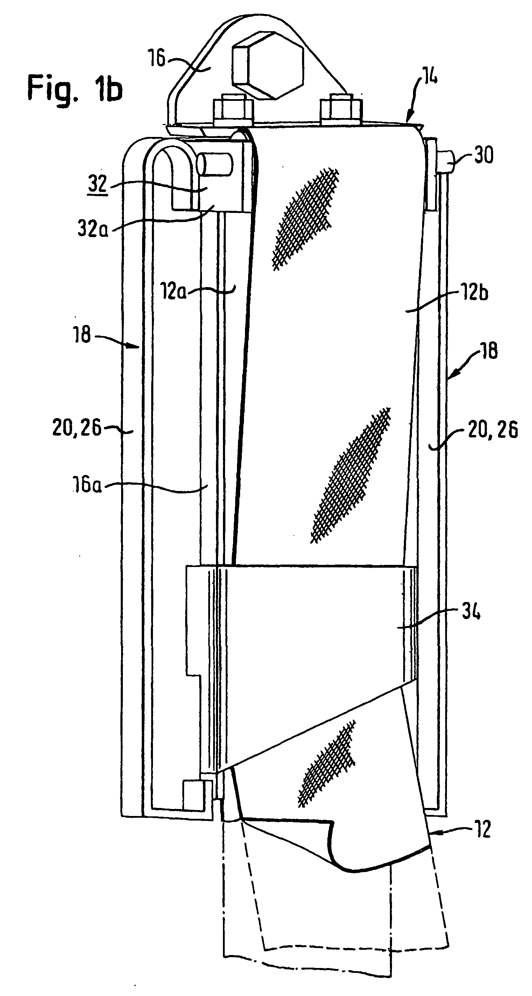

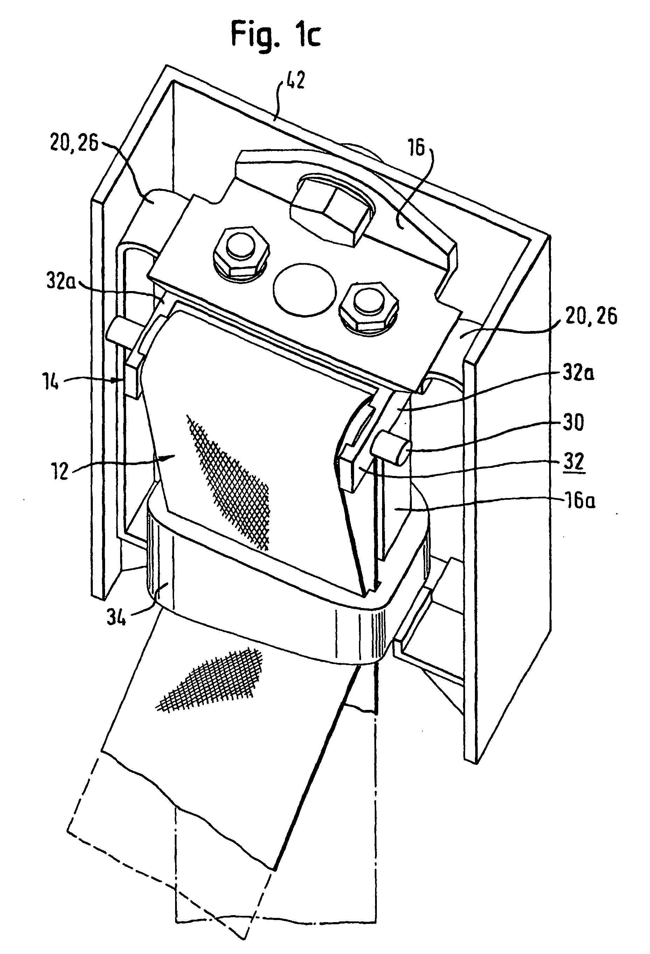

Die Umlenkeinrichtung 14 umfaßt eine Umlenkrolle 30, die in einem Träger 32 drehbar gelagert ist. Der Sicherheitsgurt 12 verläuft von einem nicht dargestellten unteren Gurtaufroller parallel zur Halterung 16 nach oben, wird von der Umlenkrolle 30 um etwa 180° umgelenkt und verläuft somit wiederum etwa parallel zur Halterung 16 nach unten bis zu einem in dem dargestellten Normalbetriebszustand oberhalb des Gurtstraffers angeordneten Ablenkorgan 34, von dem aus der Gurt 12 während des Fahrzeugbetriebs zu dem jeweiligen Fahrzeuginsassen führt. Das Ablenkorgan 34, das vorzugsweise höhenverstellbar an der Halterung 16 fixiert ist, sorgt dafür, daß oberhalb des Ablenkorgans 34 die beiden Gurtabschnitte 12a und 12b (vgl. Fig. 1b) zumindest näherungsweise parallel zueinander verlaufen.

Zwischen dem Träger 32 der Umlenkeinrichtung 14 und einem unteren, etwa in Höhe des Gurtstraffers gelegenen Bereich der Halterung 16 erstrecken sich zwei seitlich angeordnete, streifenförmige Biegeelemente 20. Die Biegeelemente 20 dienen jeweils als ein Absorptionsabschnitt 26 einer von ihnen gemeinsam gebildeten Absorptionseinheit 18. Über die Absorptionseinheit 18 ist die Umlenkeinrichtung 14 bzw. der Träger 32 mit der Halterung 16 verbunden. Eine zusätzliche Verbindung, die einer vertikalen Bewegung des Trägers 32 relativ zur Halterung 16 einen relevanten Widerstand entgegensetzen könnte, besteht zwischen der Umlenkeinrichtung 14 und der Halterung 16 nicht.

Der Träger 32 wirkt mit der Halterung 16 insofern zusammen, als eine vertikale Bewegung des Trägers 32 durch die Halterung 16 geführt ist. Hierzu weist der Träger 32 einen Führungsabschnitt auf, von dem in den Fig. 1a bis 1c zwei sich senkrecht zur Drehachse der Umlenkrolle 30 erstreckende Arme 32a dargestellt sind und der eine vertikale Führungsschiene 16a der Halterung 16 umgreift. Mit den Armen 32a des Trägers 32 sind die Absorptionsabschnitte 26 jeweils über ihr oberes, U-förmig nach innen umgebogenes Ende verbunden.

An der Führungsschiene 16a der Halterung 16 ist außerdem das Ablenkorgan 34 angebracht, wie insbesondere aus Fig. 1c hervorgeht.

Das untere Ende der Biegestreifen 20 ist nach innen hakenartig abgewinkelt, so daß die Biegestreifen 20 parallel versetzt zur Führungsschiene 16a verlaufen. Die Biegeelemente 20 sind vorzugsweise aus Metall hergestellt, insbesondere aus Stahl.

Die Festigkeit oder Biegesteifigkeit der Biegestreifen 20 ist derart gewählt, daß im Normalbetrieb über den Gurt 12 auf die Umlenkeinrichtung 14 einwirkende Kräfte die Streifen 20 nicht oder allenfalls nur in einem vernachlässigbaren Ausmaß verbiegen können. Die Umlenkeinrichtung 14 ist im Normalbetrieb daher an einer Bewegung nach unten gehindert. Die von den Streifen 20 gebildete Absorptionseinheit 18 gewährleistet so einen normalen Betrieb der Umlenkeinrichtung 14.

Die Absorptionseinheit 18 ist so ausgelegt, daß bei einem Unfall dagegen, wenn der jeweilige Fahrzeuginsasse aufgrund seiner Trägheit schlagartig am Gurt 12 zieht und der Gurtaufroller blockiert, die hierdurch über den Gurt 12 auf die Umlenkeinrichtung 14 einwirkenden, im wesentlichen vertikal nach unten gerichteten Kräfte ausreichen, um die Biegeelemente 20 zu verformen. Bei einem Unfall wird folglich die Umlenkeinrichtung 14 unter Verformung der Biegeelemente 20 entlang der Führungsschiene 16a der Halterung 16 vertikal nach unten bewegt. Die kinetische Energie des Fahrzeuginsassen wird somit durch die Verformung der Biegeelemente 20 absorbiert. Allgemein ausgedrückt: Es wird an der Absorptionseinheit 18 Arbeit geleistet, die eine Formänderung der Absorptionseinheit 18 zur Folge hat, um auf diese Weise die Bewegungsenergie des Fahrzeuginsassen aufzunehmen.

Durch entsprechende Auslegung der Biegeelemente 20 können somit grundsätzlich beliebig große Energien auf kürzestem Wege, d.h. durch eine vergleichsweise kurze vertikale Wegstrecke der Umlenkeinrichtung 14, absorbiert werden.

Aufbau und Funktionsweise weder des Gurtaufrollers noch anderer Komponenten der Sicherheitsgurtvorrichtung werden durch die erfindungsgemäße Art und Weise der Energieabsorption beeinträchtigt.

Im folgenden werden weitere Beispiele für die erfindungsgemäße Energieabsorption beschrieben, bei denen zur Energieabsorption an einer Absorptionseinheit 18 Formänderungsarbeit geleistet wird.

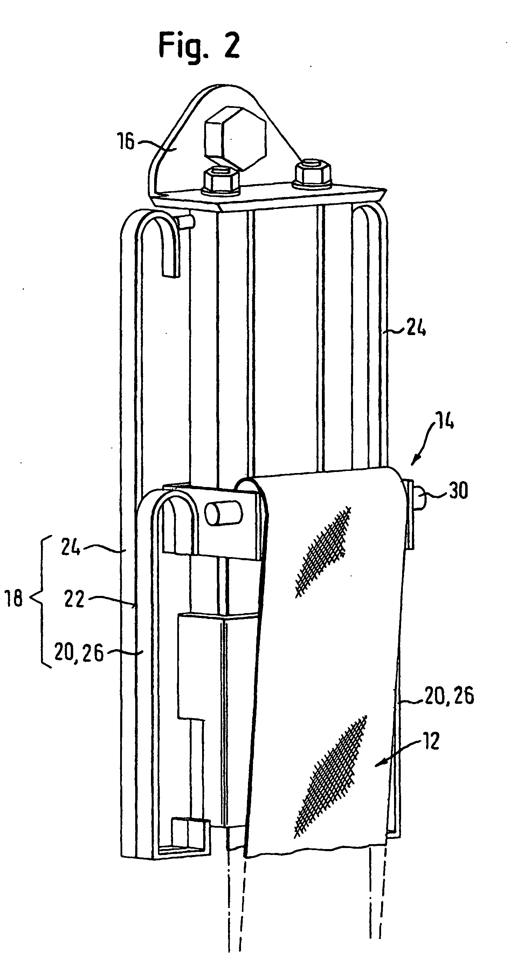

Fig. 2 zeigt eine Variante der Erfindung, bei der die Absorptionseinheit 18 zusätzlich zu als Absorptionsabschnitte 26 dienenden Biegestreifen 20 zwei weitere streifenförmige Elemente umfaßt, die im folgenden auch als Basisteile 24 bezeichnet werden.

In Fig. 2 ist die Sicherheitsgurtvorrichtung während oder am Ende der Energieabsorption gezeigt. Die Umlenkeinrichtung 14 befindet sich unterhalb ihrer Normalposition, die sie während des Normalbetriebs einnimmt.

Während des Normalbetriebs sind die Biegestreifen 20 und die Basisstreifen 24 entlang einer linienförmigen Solltrennstelle 22 fest miteinander verbunden. Zur Verbindung können die beiden Streifen 20, 24 beispielsweise miteinander verschweißt werden. Es ist auch möglich, in einem einstückigen Ausgangsstreifen eine gezielte Materialschwächung beispielsweise durch Ausbilden einer Nut oder Kerbe zur Herstellung der Solltrennstelle 22 vorzusehen.

Wenn die Umlenkeinrichtung 14 bei einem Unfall aufgrund der über den Sicherheitsgurt 12 aufgebrachten Kräfte nach unten bewegt wird, dann erfolgt nicht nur eine Verformung der Biegestreifen 20, sondern es muß Energie auch dafür aufgebracht werden, die Verbindung zwischen den beiden Streifen 20, 24 an der Solltrennstelle 22 aufzutrennen.

Es findet folglich eine kombinierte Energieabsorption in der von den beiden Doppelstreifen 20, 24 gebildeten Absorptionseinheit 18 statt, mit der das Verhalten der Absorptionseinheit 18 in besonders vorteilhafter Weise gezielt eingestellt werden kann.

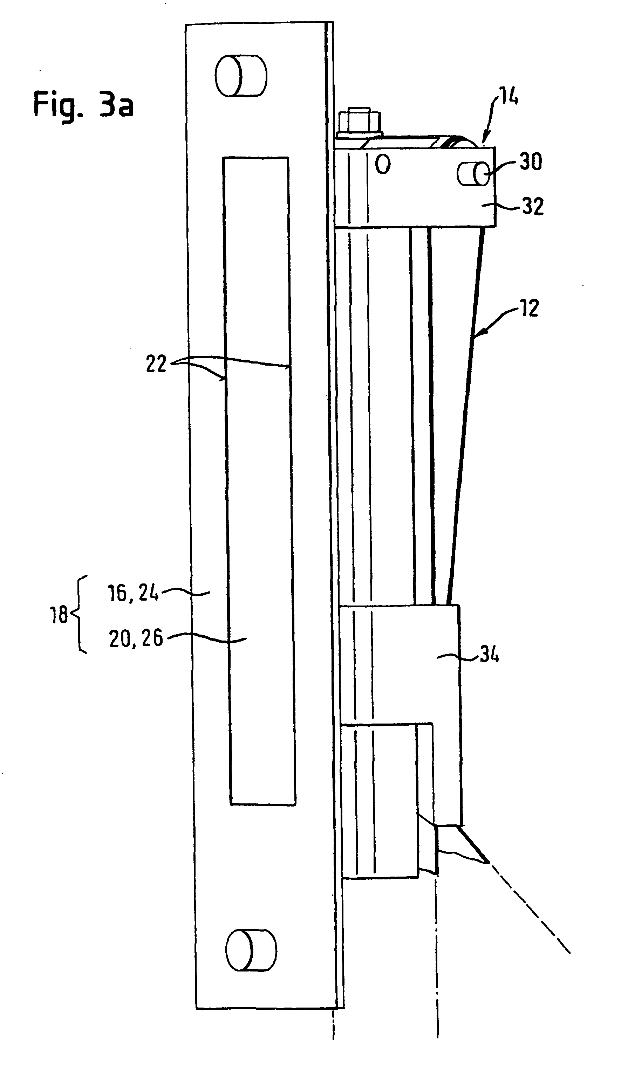

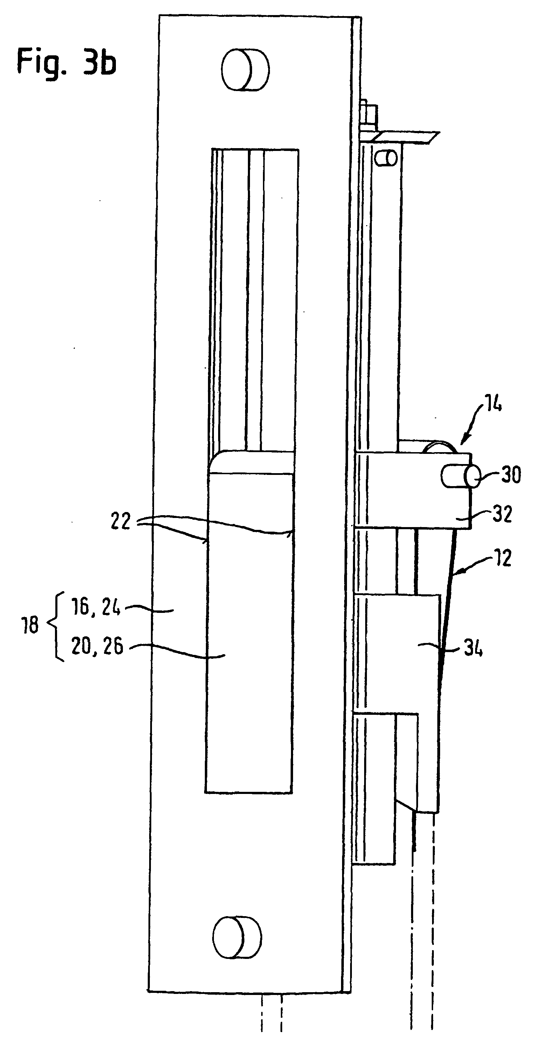

Die Fig. 3a und 3b zeigen eine Variante der Erfindung, bei der wiederum gleichzeitig eine Verformung eines als streifenförmiges Biegeelement 20 ausgebildeten Absorptionsabschnitts 26 und die Auftrennung einer während des Normalbetriebs gemäß Fig. 3a festen Verbindung zwischen dem Biegestreifen 20 und einem plattenförmigen Basisteil 24 erfolgt.

In dem gezeigten Ausführungsbeispiel ist das plattenförmige Basisteil 24 ein Bestandteil der Halterung 16. Es ist auch möglich, einen Teil des Fahrzeugs bzw. der Fahrzeugseitenwand selbst als ein Basisteil vorzusehen, von dem der Absorptionsabschnitt 26 zur Energieabsorption abtrennbar und an dem eine Halterung für die Sicherheitsgurtvorrichtung befestigt ist.

Während des Normalbetriebs ist der Biegestreifen 20 derart in das Basisteil 24 integriert, daß die beiden Teile gemeinsam eine durchgehende Platte bilden. Wie Fig. 3b zeigt, wird zur Energieabsorption, wenn sich die Umlenkeinrichtung 14 vertikal nach unten bewegt, der Biegestreifen 20 einerseits verformt und andererseits entlang der linienförmigen Solltrennstellen 22 ähnlich wie der Deckel einer Fischkonserve zumindest teilweise vom Basisteil 24 abgezogen oder abgerissen.

Die erfindungsgemäße Auftrennung einer zwischen einem Absorptionsabschnitt 26 und einem Basisteil 24 der Absorptionseinheit 18 bestehenden festen Verbindung, die bei im Normalbetrieb auftretenden Kräften eine Bewegung der Umlenkeinrichtung 14 in Absorptionsrichtung, d.h. in den dargestellten Ausführungsbeispielen vertikal nach unten, verhindert, kann so ausgestaltet sein, daß der Absorptionsabschnitt 26 vom Basisteil 24 abgerissen oder aus dem Basisteil 24 herausgerissen wird.

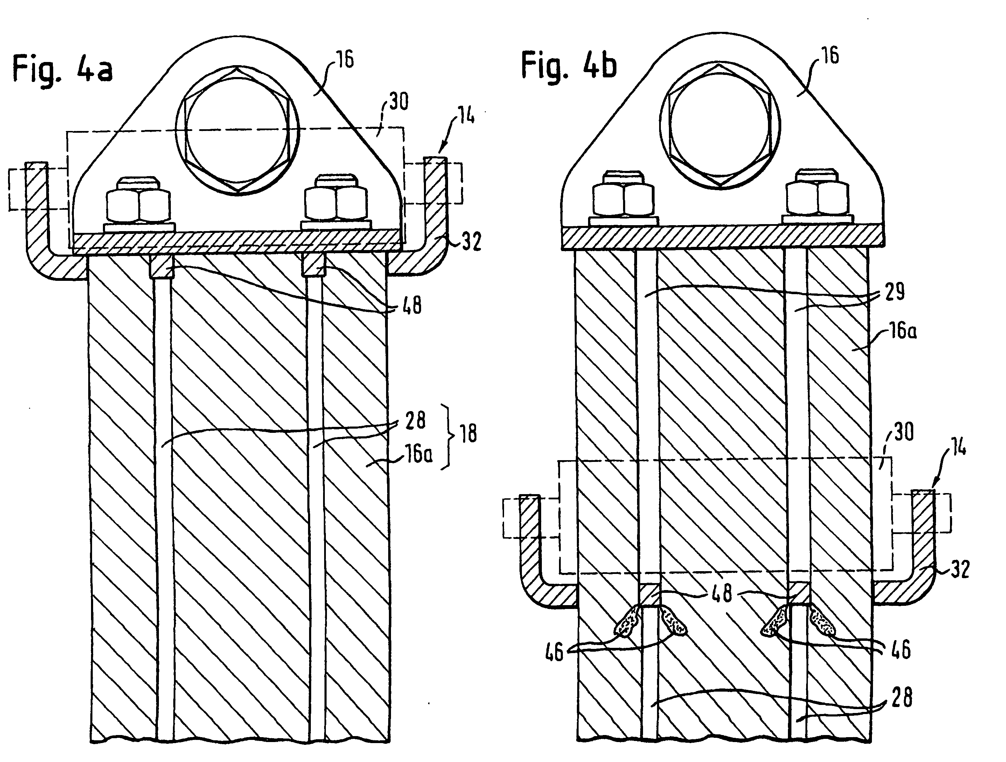

Ein weiteres Ausführungsbeispiel der Erfindung ist in Fig. 4a und Fig. 4b gezeigt.

Die lediglich teilweise dargestellte Sicherheitsgurtvorrichtung umfaßt eine Halterung 16 mit einer sich in vertikaler Richtung erstreckenden Führungsschiene 16a. Der Träger 32 der Umlenkeinrichtung 14, an dem eine Umlenkrolle 30 gelagert ist, wirkt mit der Führungsschiene 16a zusammen, indem zwei Eingriffsabschnitte 48 des Trägers 32 jeweils in eine schlitzförmige Aussparung 28 eingreifen, die in der Führungsschiene 16a ausgebildet ist.

Im Normalbetriebszustand gemäß Fig. 4a sitzen die Eingriffsabschnitte 48 in Anfangsbereichen der Aussparungen 28, die entsprechend der äußeren Form der Eingriffsabschnitte 48 bemessen sind und somit eine für die Eingriffsabschnitte 48 ausreichende Weite aufweisen. Hieran anschließende Bereiche 29 der Schlitze 28 sind jedoch schmaler als die Eingriffsabschnitte 48, so daß bezüglich dieser in Absorptionsrichtung vor den Eingriffsabschnitten 48 liegenden Schlitzbereiche 29 die Eingriffsabschnitte 48 überdimensioniert sind.

Die Absorptionseinheit 18 wird in dieser Ausführungsform von den Schlitzen 28 und der Führungsschiene 16a bzw. von dem die Schlitze 28 begrenzenden Material der Führungsschiene 16a gebildet.

Wenn bei einem Unfall die Umlenkeinrichtung 14 über den nicht dargestellten Sicherheitsgurt nach unten gezogen wird, erfolgt die Formänderung der Absorptionseinheit 18 durch Materialwegnahme an der Führungsschiene 16a. Durch entsprechende Materialwahl für den Träger 32 oder zumindest dessen Eingriffsabschnitte 48 einerseits und für die Führungsschiene 16a oder zumindest deren die Schlitze 28 begrenzenden Bereiche sind die Eingriffsabschnitte 48 in der Lage, die Schlitze 28 durch Materialwegnahme auf ihre eigene Breite zu schneiden.

Die Energieabsorption erfolgt somit durch spanende Materialbearbeitung an der Führungsschiene 16a. Das weggenommene Material 46 ist in Fig. 4b dargestellt.

Die Absorptionseigenschaften der Absorptionseinheit 18 können insbesondere durch die Anzahl der Eingriffsabschnitte 48 und Aussparungen 28, die Größenverhältnisse zwischen den Eingriffsabschnitten 48 und den Aussparungen 28 und/oder die Materialwahl für die Eingriffsabschnitte 48 und die die Aussparungen 28 begrenzenden Bereiche der Führungsschiene 16a gezielt eingestellt werden.

Durch die in die Aussparungen 28 eingreifenden Trägerabschnitte 48 wird der Träger 32 während der Energieabsorption gleichzeitig an der Führungsschiene 16a und somit an der Halterung 16 geführt. Dieses Zusammenwirken zwischen dem Träger 32 und der Führungsschiene 16a kann in vorteilhafter Weise so ausgelegt werden, daß keine zusätzlichen Maßnahmen zur Führung der Umlenkeinrichtung 14 an der Halterung 16 erforderlich sind.

Die Umlenkeinrichtung könnte erfindungsgemäß über die Absorptionseinheit auch direkt mit dem Fahrzeug bzw. der Fahrzeugseitenwand verbunden sein. Die Halterung im Sinne der Erfindung wird dann von den Mitteln z.B. in Form von Verschraubungen oder Schweißstellen gebildet, mit denen die Absorptionseinheit am Fahrzeug befestigt wird.

### Bezugszeichenliste

- 12: Sicherheitsgurt
- 12a: Gurtabschnitt
- 12b: Gurtabschnitt
- 14: Umlenkeinrichtung
- 16: Halterung
- 16a: Führungsschiene
- 18: Absorptionseinheit
- 20: Biegeelement
- 22: Solltrennstelle
- 24: Basisteil
- 26: Absorptionsabschnitt
- 28: Aussparung
- 29: erweiterte Aussparung
- 30: Umlenkrolle
- 32: Träger
- 32a: Arm
- 34: Ablenkorgan
- 42: Fahrzeug, Fahrzeugseitenwand
- 46: weggenommenes Material
- 48: Eingriffsabschnitt

## Patentansprüche

1. Sicherheitsgurtvorrichtung für Kraftfahrzeuge mit einem Sicherheitsgurt (12) und einer Umlenkeinrichtung (14) für den Sicherheitsgurt (12), die mit einer am Fahrzeug befestigbaren Halterung (16) über eine Absorptionseinheit (18) verbunden ist, wobei die Umlenkeinrichtung (14) durch bei einer unfallbedingten Ziehbewegung des Sicherheitsgurtes (12) auftretende Kräfte relativ zur Halterung (16) unter Überwindung eines von der Absorptionseinheit (18) entgegengesetzten Absorptionswiderstands in einer Absorptionsrichtung bewegbar, bei im Normalbetrieb auftretenden Kräften dagegen an einer Bewegung in Absorptionsrichtung gehindert ist, und wobei zur Überwindung des Absorptionswiderstands die Absorptionseinheit (18) durch die sich in Absorptionsrichtung bewegende Umlenkeinrichtung (14) formveränderbar ist,
**dadurch gekennzeichnet,**
**daß** die Umlenkeinrichtung (14) zumindest eine Umlenkrolle (30) umfaßt, die vorzugsweise an einem mit der Absorptionseinheit (18) zusammenwirkenden Träger (32) gelagert ist, und
**daß** ein Ablenkorgan (34) vorgesehen ist, das mit dem Sicherheitsgurt (12) zwischen der Umlenkeinrichtung (14) und einem Fahrzeuginsassen derart zusammenwirkt, daß der Sicherheitsgurt (12) zwischen der Umlenkeinrichtung (14) und dem Ablenkorgan (34) zumindest näherungsweise parallel zur Absorptionsrichtung verläuft.

2. Sicherheitsgurtvorrichtung nach Anspruch 1,
**dadurch gekennzeichnet,**
**daß** die Absorptionsrichtung eine vertikal nach unten gerichtete Komponente aufweist und bevorzugt etwa parallel zur Vertikalen verläuft.

3. Sicherheitsgurtvorrichtung nach Anspruch 1 oder 2,
**dadurch gekennzeichnet,**
**daß** die Formänderung der Absorptionseinheit (18) irreversibel ist.

4. Sicherheitsgurtvorrichtung nach einem der vorhergehenden Ansprüche,
**dadurch gekennzeichnet,**
**daß** die Absorptionseinheit (18) zur Formänderung zumindest bereichsweise insbesondere plastisch verformbar ist.

5. Sicherheitsgurtvorrichtung nach einem der vorhergehenden Ansprüche,
**dadurch gekennzeichnet,**
**daß** die Absorptionseinheit (18) zumindest einen Teil (24) der Halterung (16) umfaßt.

6. Sicherheitsgurtvorrichtung nach einem der vorhergehenden Ansprüche,
**dadurch gekennzeichnet,**
**daß** die Absorptionseinheit (18) wenigstens ein insbesondere streifen- oder stabförmiges Biegeelement (20) umfaßt, das sich zwischen der Umlenkeinrichtung (14) und der Halterung (16) bevorzugt etwa parallel zur Absorptionsrichtung erstreckt.

7. Sicherheitsgurtvorrichtung nach einem der vorhergehenden Ansprüche,
**dadurch gekennzeichnet,**
**daß** eine während des Normalbetriebs bestehende Verbindung zwischen wenigstens zwei Teilabschnitten (24, 26) der Absorptionseinheit (18) zur Formänderung der Absorptionseinheit (18) auftrennbar ist.

8. Sicherheitsgurtvorrichtung nach Anspruch 7,
**dadurch gekennzeichnet,**
**daß** die Verbindung entlang zumindest einer vorgegebenen, insbesondere linienförmigen Solltrennstelle (22) auftrennbar ist.

9. Sicherheitsgurtvorrichtung nach einem der vorhergehenden Ansprüche,
**dadurch gekennzeichnet,**
**daß** ein Absorptionsabschnitt (26) der Absorptionseinheit (18) von einem Basisteil (24) abreißbar oder aus einem Basisteil (24) herausreißbar ist.

10. Sicherheitsgurtvorrichtung nach einem der vorhergehenden Ansprüche,
**dadurch gekennzeichnet,**
**daß** ein Basisteil (24), von dem ein Absorptionsabschnitt (26) der Absorptionseinheit (18) abtrennbar ist, ein Bestandteil der Halterung (16) ist.

11. Sicherheitsgurtvorrichtung nach einem der vorhergehenden Ansprüche,
**dadurch gekennzeichnet,**
**daß** ein Absorptionsabschnitt (26) der Absorptionseinheit (18) gleichzeitig verformbar und von einem Basisteil (24) abtrennbar ist.

12. Sicherheitsgurtvorrichtung nach einem der Ansprüche 9 bis 11,
**dadurch gekennzeichnet,**
**daß** das Basisteil (24) streifen- oder stabförmig ausgebildet ist und sich im Normalbetrieb parallel zu einem Absorptionsabschnitt (26) der Absorptionseinheit (18) erstreckt.

13. Sicherheitsgurtvorrichtung nach einem der Ansprüche 9 bis 11,
**dadurch gekennzeichnet,**
**daß** das Basisteil (24) plattenförmig ausgebildet ist und insbesondere etwa parallel zur Absorptionsrichtung verläuft.

14. Sicherheitsgurtvorrichtung nach einem der vorhergehenden Ansprüche,
**dadurch gekennzeichnet,**
**daß** die Formänderung der Absorptionseinheit (18) durch Materialwegnahme und insbesondere durch spanende Materialbearbeitung erfolgt.

15. Sicherheitsgurtvorrichtung nach einem der vorhergehenden Ansprüche,
**dadurch gekennzeichnet,**
**daß** die Absorptionseinheit (18) wenigstens eine zur Formänderung der Absorptionseinheit (18) erweiterbare Aussparung (28) aufweist.

16. Sicherheitsgurtvorrichtung nach Anspruch 15,
**dadurch gekennzeichnet,**
**daß** die Umlenkeinrichtung (14) mit wenigstens einem Eingriffsabschnitt (48) in die Aussparung (28) eingreift, der bezüglich eines in Absorptionsrichtung vor ihm liegenden Bereiches der Aussparung (28) überdimensioniert ist.

17. Sicherheitsgurtvorrichtung nach Anspruch 15 oder 16,
**dadurch gekennzeichnet,**
**daß** die Aussparung (28) schlitzförmig ausgebildet ist und vorzugsweise etwa parallel zur Absorptionsrichtung verläuft.

18. Sicherheitsgurtvorrichtung nach einem der Ansprüche 15 bis 17,
**dadurch gekennzeichnet,**
**daß** die Aussparung (28) in einem bevorzugt plattenförmigen Basisteil (24) ausgebildet ist, das vorzugsweise ein Bestandteil der Halterung (16) ist.

19. Sicherheitsgurtvorrichtung nach einem der vorhergehenden Ansprüche,
**dadurch gekennzeichnet,**
**daß** die Größe des Absorptionswiderstands in Abhängigkeit von der Position der Umlenkeinrichtung (14) variiert und insbesondere in Absorptionsrichtung zunimmt.

20. Sicherheitsgurtvorrichtung nach einem der vorhergehenden Ansprüche,
**dadurch gekennzeichnet,**
**daß** die Umlenkeinrichtung (14) an der Halterung (16) insbesondere parallel zur Absorptionsrichtung geführt ist.

## Claims

1. Seatbelt device for motor vehicles with a seatbelt (12) and a return device (14) for the seatbelt (12), which device is connected via an absorption unit (18) to a mount (16) which can be secured on the vehicle, the return device (14) being movable in an absorption direction, with an absorption resistance opposed by the absorption unit (18) being overcome, by means of forces relative to the mount (16) that occur during an accident-induced pulling movement of the seatbelt (12), but being prevented from a movement in the absorption direction in the case of forces occurring during normal operation, and, in order to overcome the absorption resistance, the absorption unit (18) being changeable in shape by means of the return device (14) moving in the absorption direction, **characterized in that** the return device (14) has at least one return pulley (30) which is preferably mounted on a support (32) interacting with the absorption unit (18), and **in that** a deflection member (34) is provided which interacts with the seatbelt (12) between the return device (14) and a vehicle occupant in such a manner that the seatbelt (12) runs at least approximately parallel to the absorption direction between the return device (14) and the deflection member (34).

2. Seatbelt device according to Claim 1, **characterized in that** the absorption direction has a vertically downwardly directed component and preferably runs approximately parallel to the vertical.

3. Seatbelt device according to Claim 1 or 2, **characterized in that** the changing in shape of the absorption unit (18) is irreversible.

4. Seatbelt device according to one of the preceding claims, **characterized in that** the absorption unit (18) is in particular plastically deformable at least in some regions in order to change its shape.

5. Seatbelt device according to one of the preceding claims, **characterized in that** the absorption unit (18) comprises at least a part (24) of the mount (16).

6. Seatbelt device according to one of the preceding claims, **characterized in that** the absorption unit (18) comprises at least one in particular strip- or rod-shaped bending element (20) which preferably extends approximately parallel to the absorption direction between the return device (14) and the mount (16).

7. Seatbelt device according to one of the preceding claims, **characterized in that** a connection which exists during normal operation between at least two subsections (24, 26) of the absorption unit (18) can be severed in order to change the shape of the absorption unit (18).

8. Seatbelt device according to Claim 7, **characterized in that** the connection can be severed along at least one predetermined, in particular line-shaped desired separating point (22).

9. Seatbelt device according to one of the preceding claims, **characterized in that** an absorption section (26) of the absorption unit (18) can be torn off from a base part (24) or can be torn out of a base part (24).

10. Seatbelt device according to one of the preceding claims, **characterized in that** a base part (24) from which an absorption section (26) of the absorption unit (18) can be severed is part of the mount (16).

11. Seatbelt device according to one of the preceding claims, **characterized in that** an absorption section (26) of the absorption unit (18) is simultaneously deformable and severable from a base part (24).

12. Seatbelt device according to one of Claims 9 to 11, **characterized in that** the base part (24) is of strip- or rod-shaped design and in normal operation extends parallel to an absorption section (26) of the absorption unit (18).

13. Seatbelt device according to one of Claims 9 to 11, **characterized in that** the base part (24) is of plate-like design and, in particular, runs approximately parallel to the absorption direction.

14. Seatbelt device according to one of the preceding claims, **characterized in that** the changing in shape of the absorption unit (18) takes place by removal of material and, in particular, by machining of the material.

15. Seatbelt device according to one of the preceding claims, **characterized in that** the absorption unit (18) has at least one cutout (28) which can be expanded in order to change the shape of the absorption unit (18).

16. Seatbelt device according to Claim 15, **characterized in that** the return device (14) engages by means of at least one engagement section (48) in the cutout (28), which engagement section is overdimensioned with respect to a cutout (28) region situated in front of it in the absorption direction.

17. Seatbelt device according to Claim 15 or 16, **characterized in that** the cutout (28) is of slot-shaped design and preferably runs approximately parallel to the absorption direction.

18. Seatbelt device according to one of Claims 15 to 17, **characterized in that** the cutout (28) is formed in a preferably plate-like base part (24) which is preferably part of the mount (16).

19. Seatbelt device according to one of the preceding claims, **characterized in that** the magnitude of the absorption resistance varies as a function of the position of the return device (14) and, in particular, increases in the absorption direction.

20. Seatbelt device according to one of the preceding claims, **characterized in that** the return device (14) is guided on the mount (16), in particular parallel to the absorption direction.

## Revendications

1. Dispositif de ceinture de sécurité pour véhicule automobile, comportant une ceinture de sécurité (12) et un système de renvoi (14) destiné à la ceinture de sécurité (12) et relié via une unité d'absorption (18) à une base (16) susceptible d'être fixée sur le véhicule, dans lequel le système de renvoi (14) est mobile par rapport à la base (16) dans une direction d'absorption par des forces apparaissant en cas de mouvement de traction, dû à un accident, de la ceinture de sécurité (12) tout en surmontant une résistance d'absorption opposée par l'unité d'absorption (18), mais est empêché d'effectuer un mouvement dans la direction d'absorption en cas de forces apparaissant en fonctionnement normal, et dans lequel, pour surmonter la résistance d'absorption, l'unité d'absorption (18) est de forme variable par l'intermédiaire du système de renvoi (14) se déplaçant dans la direction d'absorption,
**caractérisé en ce que**
le système de renvoi (14) comprend au moins une poulie de renvoi (30) qui est montée de préférence sur un support (32) coopérant avec l'unité d'absorption (18), et
**en ce qu'**il est prévu un organe de déflexion (34) qui coopère avec la ceinture de sécurité (12) entre le système de renvoi (14) et un occupant du véhicule, de telle sorte que la ceinture de sécurité (12) s'étend au moins approximativement parallèlement à la direction d'absorption entre le système de renvoi (14) et l'organe de déflexion (34).

2. Dispositif de ceinture de sécurité selon la revendication 1, **caractérisé en ce que** la direction d'absorption présente une composante dirigée verticalement vers le bas et s'étend de préférence approximativement parallèlement à la verticale.

3. Dispositif de ceinture de sécurité selon la revendication 1 ou 2, **caractérisé en ce que** la modification de forme de l'unité d'absorption (18) est irréversible.

4. Dispositif de ceinture de sécurité selon l'une des revendications précédentes, **caractérisé en ce que** pour la modification de forme, l'unité d'absorption (18) est au moins, par parties et en particulier, plastiquement déformable.

5. Dispositif de ceinture de sécurité selon l'une des revendications précédentes, **caractérisé en ce que** l'unité d'absorption (18) comprend au moins une partie (24) de la base (16).

6. Dispositif de ceinture de sécurité selon l'une des revendications précédentes, **caractérisé en ce que** l'unité d'absorption (18) comprend au moins un élément cintré (20) en particulier en forme de lame ou de barre qui s'étend entre le système de renvoi (14) et la base (16) de préférence approximativement parallèlement à la direction d'absorption.

7. Dispositif de ceinture de sécurité selon l'une des revendications précédentes, **caractérisé en ce qu'**une liaison existant pendant le fonctionnement normal entre au moins deux tronçons partiels (24, 26) de l'unité d'absorption (18) est séparable pour la modification de forme de l'unité d'absorption (18).

8. Dispositif de ceinture de sécurité selon la revendication 7, **caractérisé en ce que** la liaison est séparable le long d'au moins un emplacement prédéterminé destiné à la séparation (22), en particulier linéaire.

9. Dispositif de ceinture de sécurité selon l'une des revendications précédentes, **caractérisé en ce qu'**un tronçon d'absorption (26) de l'unité d'absorption (18) est susceptible d'être arraché d'une partie de base (24) ou d'être déchiré hors d'une partie de base (24).

10. Dispositif de ceinture de sécurité selon l'une des revendications précédentes, **caractérisé en ce qu'**une partie de base (24) à partir de laquelle un tronçon d'absorption (26) de l'unité d'absorption (18) est séparable fait partie de la base (16).

11. Dispositif de ceinture de sécurité selon l'une des revendications précédentes, **caractérisé en ce qu'**un tronçon d'absorption (26) de l'unité d'absorption (18) est simultanément déformable et séparable d'une partie de base (24).

12. Dispositif de ceinture de sécurité selon l'une des revendications 9 à 11, **caractérisé en ce que** la partie de base (24) est réalisée en forme de lame ou de barre et s'étend, en fonctionnement normal, parallèlement à un tronçon d'absorption (26) de l'unité d'absorption (18).

13. Dispositif de ceinture de sécurité selon l'une des revendications 9 à 11, **caractérisé en ce que** la partie de base (24) est réalisée en forme de plaque et s'étend en particulier approximativement parallèlement à la direction d'absorption.

14. Dispositif de ceinture de sécurité selon l'une des revendications précédentes, **caractérisé en ce que** la modification de forme de l'unité d'absorption (18) s'effectue par enlèvement de matière et en particulier par usinage avec enlèvement de matière.

15. Dispositif de ceinture de sécurité selon l'une des revendications précédentes, **caractérisé en ce que** l'unité d'absorption (18) présente au moins une échancrure (28) susceptible d'être élargie pour la modification de forme de l'unité d'absorption (18).

16. Dispositif de ceinture de sécurité selon la revendication 15, **caractérisé en ce que** le système de renvoi (14) s'engage par au moins un tronçon d'engagement (48) dans l'échancrure (28), qui est surdimensionné par rapport à une zone de l'échancrure (28) qui, en direction d'absorption, est située devant lui.

17. Dispositif de ceinture de sécurité selon la revendication 15 ou 16, **caractérisé en ce que** l'échancrure (28) est réalisée en forme de fente et s'étend de préférence approximativement parallèlement à la direction d'absorption.

18. Dispositif de ceinture de sécurité selon l'une des revendications 15 à 17, **caractérisé en ce que** l'échancrure (28) est réalisée dans une partie de base (24) de préférence en forme de plaque qui, de préférence, fait partie de la base (16).

19. Dispositif de ceinture de sécurité selon l'une des revendications précédentes, **caractérisé en ce que** la taille de la résistance d'absorption varie en fonction de la position du système de renvoi (14) et augmente en particulier en direction d'absorption.

20. Dispositif de ceinture de sécurité selon l'une des revendications précédentes, **caractérisé en ce que** le système de renvoi (14) sur la base (16) est guidé de préférence parallèlement à la direction d'absorption.
